# EUROPEAN PATENT APPLICATION

(11) **EP 3 989 242 A1**
(43) Date of publication of application: **27.04.2022**
(21) Application number: 20203662.0
(22) Date of filing: 23.10.2020
(51) Int. Cl.: H01B 17/16, B29C 65/00, H01B 17/26

(54) **FLANGE FOR AN ELECTRICAL BUSHING AND ELECTRICAL BUSHING**

(71) Applicant: Hitachi Energy Switzerland AG, 5400 Baden (CH)
(72) Inventor: Broderick, Samuel, 8049 Zürich (CH)
(74) Representative: Epping - Hermann - Fischer

(57) **Abstract**

A flange (2) for an electrical bushing (1) is specified, comprising a lower part (21) and an upper part (22) configured to be mechanically affixed to one another, wherein
- the lower part and the upper part are arranged one above the other in an axial direction of the flange, and
- one of the lower part and the upper part surrounds a portion of the other one of the lower part and the upper part at least in regions in a radial direction, thereby forming a positive connection (24) against relative movement of the upper part with respect to the lower part in a non-axial direction of the flange.

Furthermore, an electrical bushing (1) is specified.

## Description

The present application relates to a flange for an electrical bushing, for example to a flange configured to enable large mounting angles with respect to a vertical orientation or seismic loading, and to an electrical bushing.

Electrical bushings are used to insulate and conduct electrical power through planes with different electrical potential, such as grounded transformer housings. The structure and dimensions of such bushings depend on the respective requirements, and most types of bushings are manufactured according to specific application needs and parameter ranges. Document EP 3 579 252 A1 describes an electrical bushing with a flange comprising an upper and a lower part.

Current seismic-compatible flanges are typically single-piece cast or forged flanges configured to withstand strong mechanical loading. Depending on the application of the bushing, there is a wide variation in the diameter of the flange face and the number of bolt holes for a connection to the corresponding flange face of an appliance such as a transformer.

However, adapting these single-piece flanges to specific customer needs requires a redesign and potentially new or modified tooling for casting or forging.

It is an object of the present application to provide a flange for an electrical bushing that is mechanically robust and easily adaptable to specific customer requirements.

This object is obtained, inter alia, by an electrical bushing and a method for producing an electrical bushing according to the independent claims. Developments and expediencies are subject of the further claims.

A flange for an electrical bushing is specified. For example, the flange comprises an opening extending through the flange along an axial direction of the flange, so that a conductor may be guided through the opening to an electrical appliance, for instance a transformer housing, a switchgear or a reactor.

According to at least one embodiment, the flange comprises a lower part and an upper part configured to be mechanically affixed to one another. Thus, the upper part and the lower part of the flange may be produced separately and affixed to one another afterwards, for instance using screws. The means for affixing the two parts of the flange to one another may include, but are not limited to, bolts, screws, rivets, and clamps. Thus, the flange exhibits a modular design. The upper part and the lower part may be formed from the same material, for instance a metal such as aluminum or stainless steel. However, different materials may also be used for the parts, if expedient.

The terms "lower part of the flange" and "upper part of the flange" do not imply any limitation regarding the actual position of these elements in space. For instance, the lower part is that part of the flange that provides a mounting face for mounting the bushing to the electrical appliance.

According to at least one embodiment, the lower part and the upper part are arranged one above the other in an axial direction of the flange. For example, the lower part and the upper part directly adjoin each other along the axial direction at least in regions. An interface between the upper part and the lower part may span a connection plane. The connection plane may run in parallel to the mounting face and/or extend in radial direction perpendicular to the axis.

Here and in the following, the terms "parallel" and "perpendicular" also include slight deviations, for instance deviations of at most 15°, unless otherwise specified.

According to at least one embodiment, one of the lower part and the upper part surrounds a portion of the other one of the upper part and the lower part, respectively, at least in regions in a radial direction. For example, the lower part surrounds a portion of the upper part. For instance, one of the flange parts may surround a portion of the other one along its entire circumference. For example, a portion of the upper part may be inserted into the lower part in axial direction. The lower part and the upper part may directly adjoin each other in radial direction at least in regions.

According to at least one embodiment, a positive connection is formed between the upper part and the lower part, wherein the form-locking or positive connection refers to relative movement of the upper part with respect to the lower part in a non-axial direction of the flange. The mating surfaces for the positive connection may run in parallel or at an acute angle to the axial direction. Alternatively or in addition, the mating surfaces may run perpendicularly or obliquely with respect to the connection plane.

In the axial direction, the upper part and the lower part are held together via the mechanical means for affixing the upper part and the lower part to one another.

In at least one embodiment, a flange for an electrical bushing comprises a lower part and an upper part configured to be mechanically affixed to one another, wherein the lower part and the upper part are arranged one above the other in an axial direction of the flange. One of the lower part and the upper part surrounds a portion of the other one of the lower part and the upper part at least in regions in a radial direction, thereby forming a positive connection against relative movement of the upper part with respect to the lower part in a non-axial direction of the flange.

Due to the modular design, the flange can be adapted more easily to specific customer needs. For instance, the lower part may be modified to be compatible with a new appliance without the upper part of the flange having to be redesigned.

Furthermore, it has been found that the mechanical robustness of the flange can be significantly improved by means of the positive connection that provides a loading path for forces acting on the flange in non-axial direction, especially compared to a flat lower part that does not surround the upper part. For example, the load on the mechanical affixing means, for instance bolts, between the flange parts is relieved, so that larger mounting angles, for instance 30° or more with respect to a vertical orientation in space and/or seismic loading are enabled.

According to at least one embodiment, the lower part of the flange comprises a mounting face configured for mounting the flange to an appliance. The means for mounting the bushing to the electrical appliance include, but are not limited to, bolts, rivets, and clamps.

According to at least one embodiment, the upper part and the lower part are affixed to one another along a connection plane running in parallel to the mounting face, wherein the lower part comprises an elevation. In other words, the elevation extends beyond the connection plane in axial direction when seen from the mounting face. The elevation may form a neck portion of the lower part. The elevation facilitates the formation of a positive connection between the lower part and the upper part. For example, the elevation surrounds the upper part or the upper part surrounds the elevation. In the first case, the elevation may form an inner wall of the lower part of the flange facing the upper part of the flange. In the second case, the elevation may form an outer wall of the lower part facing the upper part of the flange.

According to at least one embodiment, the elevation comprises an annular portion extending along the upper part. For example, the elevation extends around the upper part. Alternatively, the upper part may extend around the elevation. The annular portion may have a rectangular or trapezoidal cross-section, for instance.

According to at least one embodiment, the elevation further comprises a plurality of ribs mechanically supporting the annular portion on a side of the annular portion facing away from the upper part of the flange. The ribs further improve the mechanical robustness of the flange against forces acting in the non-axial direction.

According to at least one embodiment, the upper part overlaps with the elevation when seen along the axial direction. For example, the upper part may cover the interface between the mating surfaces of the positive connection. For instance, the upper part comprises a circumferential portion that forms an undercut when seen along the axial direction toward the mounting face.

According to at least one embodiment, the positive connection is configured as a clearance fit or transition fit. A clearance fit is preferably a sliding fit or a location fit in order to ensure that the lower part prevents radial movement of the upper part caused by a non-axially acting force on the flange.

According to at least one embodiment, the positive connection is configured as an interference fit, also known as a press fit or friction fit. The assembly of the flange parts may be performed using mechanical pressure. Alternatively or in addition, that flange part that surrounds the other flange part in the finished flange is kept at a higher temperature than the other flange part prior to or during the assembly, for example by heating or cooling of one of the flange parts. Thus, the pressure between the upper part and the lower part increases after the assembly when both flange parts have reached the same temperature. An interference fit ensures a reliable load path from the upper part of the flange to the lower part of the flange in the event of a non-axial force acting on the flange.

According to at least one embodiment, the upper part is configured to receive an insulator. For instance, the upper part comprises an indentation configured to receive an end part of an insulator. The insulator may comprise a polymer material such as a fiber reinforced plastic with silicone sheds or silicone in the case of direct-molding or a ceramic such as a porcelain, for instance. The insulator may form a closed seal with the flange. Ingress of water or contamination may be prevented in this way. However, depending on the application of the bushing such an insulator may also be dispensed with.

According to at least one embodiment, at least one of the upper part and the lower part is configured to receive at least one gasket for a sealed connection between the lower part and the upper part. For example, both the lower part and the upper part are configured to obtain a sealed connection. For example, one of the upper part and the lower part provides a recess such as a groove to receive a gasket and the other one of the flange part has a surface finish at a position located opposite the recess to facilitate the sealed connection. For instance, the gasket may be an O-ring. Alternatively or in addition, the lower part is configured to receive at least one gasket at the mounting face.

According to at least one embodiment, the flange is configured to receive a wiper extending around the upper part and covering at least a portion of the lower part when seen along the axial direction. For example, the wiper covers the mating surfaces of the positive connection when seen along the axial direction. By means of the wiper, the bushing may be adapted to extreme environmental conditions, for instance in desert, coastal and maritime environments.

Furthermore, an electrical bushing comprising a flange is specified. The flange may exhibit one or more of the features mentioned above.

According to at least one embodiment, the bushing is a capacitance graded bushing, for example a condenser core bushing. In a condenser core bushing, a core comprising several layers of intermittent conductive and dielectric films is arranged around a central conductor, thereby controlling the distribution of the electric field by capacitive grading. Typically, the core extends through the flange and into the volume of the electrical appliance.

According to at least one embodiment, the electrical bushing is configured for voltages between 3.6 kV and 1200 kV, for example between 245 kV and 550 kV.

Further embodiments and developments of the flange and the bushing will become apparent from the exemplary embodiments described below in association with the figures. Features illustrated or described as part of one embodiment can be used on or in conjunction with any other embodiment to yield yet a further embodiment. It is intended that the present disclosure includes such modifications and variations.

In the figures:
Fig. 1 shows a schematic perspective cutaway view of an exemplary embodiment of a flange according to an exemplary embodiment;
Fig. 2 shows a schematic sectional view of an electrical bushing according to an exemplary embodiment;
Fig. 3 shows a schematic sectional view of an electrical bushing according to a further exemplary embodiment; and
Fig. 4 shows a schematic sectional view of an electrical bushing according to a further exemplary embodiment.

In the exemplary embodiments and figures similar or similarly acting constituent parts are provided with the same reference signs. Generally, only the differences with respect to the individual embodiments are described. Unless specified otherwise, the description of a part or aspect in one embodiment applies to a corresponding part or aspect in another embodiment as well.

The elements illustrated in the figures and their size relationships among one another are not necessarily true to scale. Rather, individual elements or layer thicknesses may be represented with an exaggerated size for the sake of better representability and/or for the sake of better understanding.

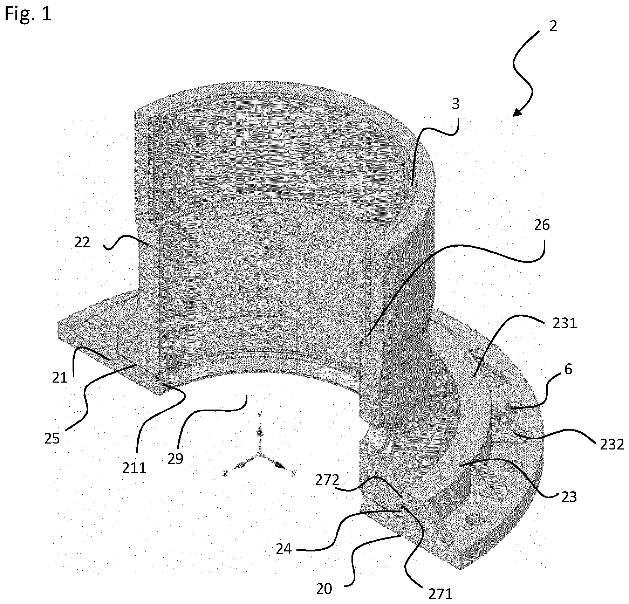

In Figure 1 an exemplary embodiment of a flange 2 is illustrated in a perspective cutaway view. The flange 2 comprises a lower part 21 and an upper part 22. The lower part 21 forms a mounting face 20 for mounting the flange 2 to an appliance, for instance to a corresponding flange of the appliance.

The flange 2, for example the lower part 21 and the upper part 22 may be made from a metal or a metal alloy, for instance from an aluminum alloy or stainless steel.

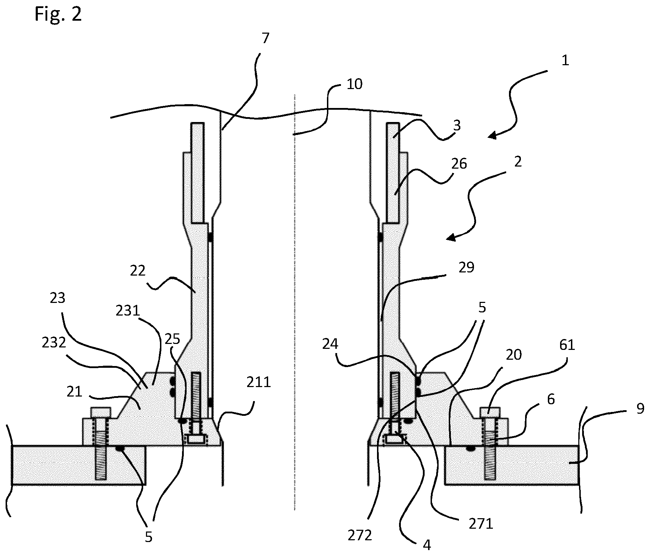

The lower part 21 and the upper part 22 of the flange are arranged one above the other in an axial direction of the flange (y direction in Figure 1, axis 10 in Figures 2 through 4) .

The lower part 21 surrounds a portion of the upper part 22 of the flange 2, thereby forming a positive connection 24 against relative movement of the upper part 22 with respect to the lower part 21 in a non-axial direction of the flange 2.

Along the axial direction the lower part 21 and the upper part 22 directly adjoin each other at a connection plane 25 extending in parallel to the mounting face 20. A bolted joint which is preferably also a sealing joint between the lower part 21 and the upper part 22 is formed at the connection plane 25. When seen along the axial direction towards the mounting face 20, the upper part 22 does not extend beyond the connection plane 25 at any position.

With respect to the connection plane 25 the lower part 21 comprises an elevation 23. In the exemplary embodiment shown, the elevation 23 is formed by an annular portion 231. The extension of the elevation 23 in axial direction is preferably small compared to that of the upper part 22, for instance at most 30% or at most 20% and/or at least 1% or at least 5%.

An inner wall 271 of elevation 23 directly adjoins an outer wall 272 of the upper part 22 to form the positive connection 24.

The lower part 21 with the elevation 23 is preferably formed in one piece. The lower part 21 and/or the upper part 22 may be formed by casting, for instance.

The lower part 21 further comprises ribs 232 arranged on that side of the annular portion 231 that faces away from the inner wall 271. Of course, the shape of the elevation 23 may be modified in wide ranges, as long as a positive connection with respect to non-axial movement of the upper part 22 is obtained. For instance, the ribs 232 may be dispensed with. The extent of the elevation 23 in radial direction may also vary. For instance, the elevation 23 may also extend to the outer edge of the lower part 21, so that a surface of the lower part 21 opposite the mounting face 20 is completely flat beside the upper part 22.

In the axial direction the lower part 21 and the upper part 22 are held together via connection means 4 such as screws or bolts (cf. Figure 2).

The positive connection 24 counteracts a movement of the upper part 22 with respect to the lower part 21 in the event of a non-axially acting mechanical loading on the upper part 22. Therefore, the mechanical load on the connection means 4 is significantly reduced. Furthermore, the contact between the lower part 21 and the upper part 22 at the connection plane 25 is significantly improved. Thus, the positive connection 24 prevents a gap from forming between the flange parts under mechanical loading. This allows the flange to be used for applications requiring a high mechanical robustness, for instance due to large mounting angles with respect to a vertical orientation in space or due to seismic loading.

For example it has been found by simulations that the short neck of the lower part 21 formed by the elevation 23 significantly increases the mechanical stability of the flange 2 compared to a lower part 21 configured as a flat plate without any elevations at the connection plane.

The positive connection 24 may be configured as a clearance fit, as a transition fit or as an interference fit. For example, an interference fit is suited as it ensures a strong mechanical coupling between the lower part 21 and the upper part 22 at the mating surfaces of the positive connection 24. For instance, at least one of the flange parts may be subjected to mechanical pressure and/or heating or cooling in order to obtain the interference fit.

The upper part 22 further comprises an indentation 26 facing an opening 29 of the flange. The indentation 26 is configured to receive an end part of an insulator 3. However, depending on the bushing type an insulator is not necessarily required.

The lower part 21 further comprises a seat 211 configured to mechanically support a core of the bushing. For example, the seat 211 is a conical portion, where the diameter of the opening 29 tapers in axial direction when seen towards the mounting face 20.

In the exemplary embodiment shown, the lower part 21 surrounds the upper part 22 to form the positive connection between the flange parts in non-axial direction. However, the arrangement may also be inverted, so that the upper flange part 22 surrounds the lower flange parts 21. This also applies to the subsequent exemplary embodiments.

An electrical bushing 1 with a flange 2 as described in connection with Figure 1 is illustrated in Figure 2. A core 7 is inserted into the opening 29 of the flange 2 and extends into an appliance 9 to which the electrical bushing 1 is mounted at the mounting face 20 of the flange 2. The core 7 is a machined resin impregnated paper condenser core, for example.

Figure 2 further illustrates possible positions of recesses 5 configured to receive a gasket such as an O-ring in order to obtain a sealed connection between the lower part 21 and the upper part 22 and/or between the flange 2 and the appliance 9.

The lower part 21 of the flange 2 further comprises mounting holes 6 configured to match with threaded or through holes provided in the appliance 9 in order to obtain a mechanical connection using mounting means 61, for instance screws.

Due to the modular configuration of the flange 2 comprising a lower part 21 and an upper part 22, the lower part 21 can be adapted to the electrical appliance 9, for instance with respect to the diameter of the mounting face and/or the position and/or the number of required mounting holes, without the entire flange 2, for example the upper part 22, having to be redesigned. Thus, the customer requirements may be met by machining the casted lower part 21. The upper part 22 and the insulator 3 may be the same for the bushing voltage and current class, independent of the customer interface. This helps to reduce the costs and delivery times.

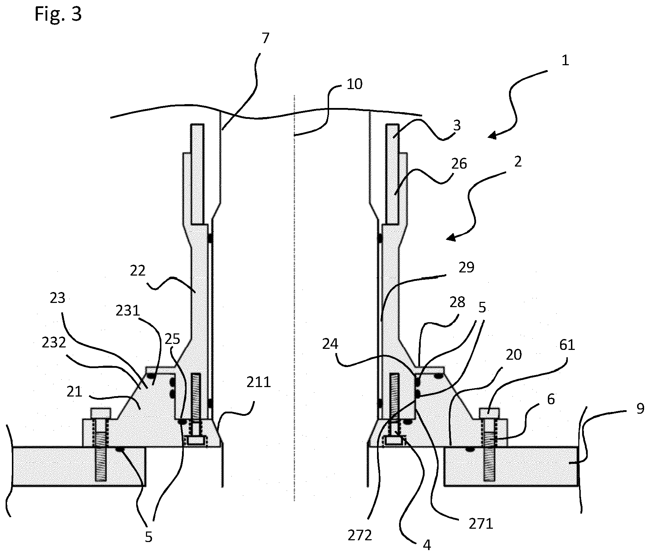

A further exemplary embodiment of an electrical bushing 1 is illustrated in Figure 3. This exemplary embodiment essentially corresponds to that described in connection with Figure 2. In departure therefrom, the upper part 22 of the flange 2 comprises a circumferential portion 28 that covers at least part of the elevation 23 of the lower part when seen along the axial direction. The circumferential portion 28 may form a "roof" that helps to prevent moisture or dust from reaching the opening 29 along the interface between the lower part 21 and the upper part 22.

As illustrated in Figure 2, a recess 5 may be provided in order to obtain a sealed connection between the elevation 23 of the lower part 21 and the circumferential portion 28 of the upper part.

In the exemplary embodiments shown in Figures 2 and 3 the recesses 5 are provided in the lower flange 21. However, such recesses may be provided alternatively or in addition in the upper flange part 22 and/or in the appliance 9.

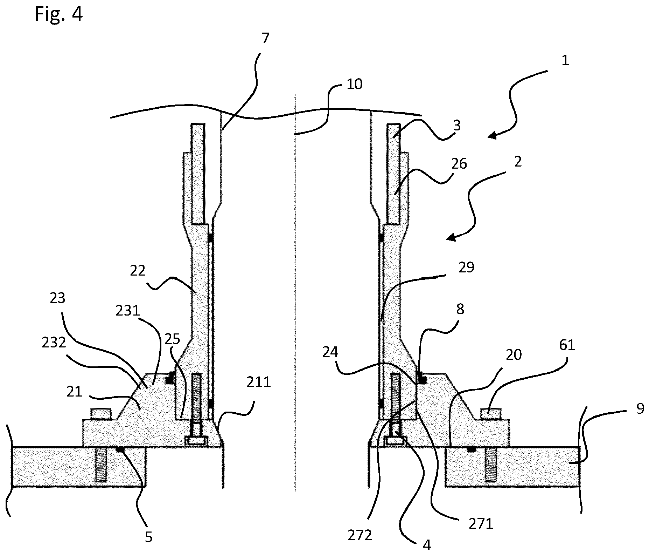

A further exemplary embodiment of a bushing is illustrated in Figure 4. This exemplary embodiment essentially corresponds to that described in connection with Figure 2.

In this exemplary embodiment, the flange 2 is configured to receive a wiper 8. The wiper 8 helps to prevent ingress of contaminants at the interface between the upper flange part 22 and the lower flange part 21. The wiper 28 extends around the upper part 22 and covers a part of the lower part 21 when seen along the axis 10. Of course, such a wiper may also be provided in the previous exemplary embodiments.

The bushing 1 has been described in connection with a condenser core bushing, but the inventive concept may also be used for any other kind of electrical bushing, such as a solid bushing, also known as a bulk type bushing. The skilled technician is aware that the components of the flange and the bushing may be made from a number of available materials and composites, such that the mention of one specific material must not be understood as a limitation. For instance, the core 7 of the bushing can be made from any suitable material or compound, such as resin impregnated paper, resin impregnated synthetic, resin impregnated nonwoven or solid epoxy.

The invention is not restricted to the exemplary embodiments by the description on the basis of said exemplary embodiments. Rather, the invention encompasses any new feature and also any combination of features, which in particular comprises any combination of features in the patent claims and any combination of features in the exemplary embodiments, even if this feature or this combination itself is not explicitly specified in the patent claims or exemplary embodiments.

### List of reference signs

- 1: bushing
- 10: axis
- 2: flange
- 20: mounting face
- 21: lower part of the flange
- 211: seat
- 22: upper part of the flange
- 23: elevation
- 231: annular portion
- 232: rib
- 24: positive connection
- 25: connection plane
- 26: indentation
- 271: inner wall of lower part
- 272: outer wall of upper part
- 28: circumferential portion
- 29: opening
- 3: insulator
- 4: connection means
- 5: recess
- 6: mounting hole
- 61: mounting means
- 7: core
- 8: wiper
- 9: appliance

## Claims

1. A flange (2) for an electrical bushing (1) comprising a lower part (21) and an upper part (22) configured to be mechanically affixed to one another, wherein
- the lower part and the upper part are arranged one above the other in an axial direction of the flange, and
- one of the lower part and the upper part surrounds a portion of the other one of the lower part and the upper part at least in regions in a radial direction, thereby forming a positive connection (24) against relative movement of the upper part with respect to the lower part in a non-axial direction of the flange.

2. The flange according to claim 1,
wherein the lower part of the flange comprises a mounting face (20) configured for mounting the flange to an appliance (9) .

3. The flange according to claim 2,
wherein the upper part and the lower part are affixed to one another along a connection plane (25) running in parallel to the mounting face, wherein the lower part comprises an elevation (23), wherein the elevation surrounds the upper part or the upper part surrounds the elevation on a side of the connection plane that faces away from the mounting face.

4. The flange according to claim 3,
wherein the elevation comprises an annular portion (231) extending along the upper part.

5. The flange according to claim 4,
wherein the elevation further comprises a plurality of ribs (232) mechanically supporting the annular portion on a side of the annular portion facing away from the upper part of the flange.

6. The flange according to claim 4 or 5,
wherein the upper part overlaps with the elevation when seen along the axial direction.

7. The flange according to any of the preceding claims, wherein the positive connection is configured as a clearance fit or a transition fit.

8. The flange according to any of claims 1 to 6,
wherein the positive connection is configured as an interference fit.

9. The flange according to any of the preceding claims, wherein the upper part comprises an indentation (26) configured to receive an end part of an insulator.

10. The flange according to any of the preceding claims, wherein at least one of the upper part and the lower part is configured for a sealed connection between the lower part and the upper part.

11. The flange according to any of the preceding claims, wherein the flange is configured to receive a wiper (8) extending around the upper part and covering at least part of the lower part when seen along the axial direction.

12. An electrical bushing (1) comprising a flange (2) according to any of the preceding claims.

13. The electrical bushing according to claim 12, wherein the bushing is a capacitance graded bushing.

14. The electrical bushing according to claim 12 or 13, wherein the electrical bushing is configured for voltages between 3.6 kV and 1200 kV.
